# EUROPÄISCHE PATENTSCHRIFT

(11) **EP 1 249 382 B1**
(45) Veröffentlichungstag und Bekanntmachung des Hinweises auf die Patenterteilung: **07.03.2012**
(21) Anmeldenummer: 02007508.1
(22) Anmeldetag: 02.04.2002
(51) Int. Cl.: B62D 33/02

(54) **Riegelverschluss für Nutzfahrzeuge**
Interlock device for sideboards of trucks
Dispositif de verrouillage pour panneaux latéraux de véhicules de transport

(30) Priorität: 13.04.2001 DE 20106452 U
(43) Veröffentlichungstag der Anmeldung: 16.10.2002
(73) Patentinhaber: F. HESTERBERG & SÖHNE GmbH & Co. KG, 58256 Ennepetal (DE)
(72) Erfinder: Bosch, Heiko, 58339 Breckerfeld (DE); Klein, Claus-Jürgen, 58332 Schwelm (DE); Tiedtke, Henning, 58256 Ennepetal (DE)
(74) Vertreter: Christophersen, Ruth

(56) Entgegenhaltungen:
- EP-A- 0 431 518
- EP-A- 0 519 894
- DE-U- 9 217 849
- DE-U1- 29 807 738
- DE-U1- 29 815 650

## Beschreibung

Die Erfindung bezieht sich auf einen Riegelverschluss für Nutzfahrzeuge zum Verriegeln einer Bordwand, Türe o. dgl. gegen ein weiteres Aufbauteil des Fahrzeugs gemäß dem Oberbegriff des Anspruchs 1.

Riegelverschlüsse dieser Art sind in den verschiedensten Ausführungsformen bekannt, so z. B. aus der DE 298 07 738 U1 und der DE 298 15 650 U1. Bei diesen Riegelverschlüssen ist es wichtig, dass die Verriegelung der Bordwand oder Türe mit dem weiteren Aufbauteil spielfrei erfolgt. Hierzu ist der Riegel mehrteilig und besteht u. a. aus einem Riegelstumpf und einem mit diesem über eine Feder zusammenwirkenden Verriegelungsglied. Dadurch wird in der Schließstellung das Verriegelungsglied in die Aufnahme am weiteren Aufbauteil gedrückt, wodurch die erwünschte spielfreie Verbindung erreicht wird. Im Falle einer Abnutzung des Verriegelungsglieds und/oder der Aufnahme ergibt sich hierdurch gleichzeitig eine automatische Nachstellung, so dass auch nach einer beträchtlichen Abnutzung eine spielfreie Verbindung gewährleistet ist.

Für die automatische Nachstellung des Riegels ist bei dem Riegelverschluss nach der DE 298 15 650 U1 eine Metallfeder vorhanden, die einerseits an einem U-förmigen Schieber des Riegels angreift, und sich andererseits gegen eine Achse des Kniehebels abstützt. Die Bauart ist dergestalt, dass das Verriegelungsglied und der Riegelstumpf ein einstückiges, starres Metallbauteil bilden, wohingegen der darin geführte U-förmige Schieber und ein in dem Schieber quer sitzender Metallbolzen separate Bauteile sind.

Nachteilig an dieser Art von Ausbildung des Riegels ist, dass er aus mehreren Einzelteilen besteht, was nicht nur die Gesamtzahl der Teile des Verschlusses erhöht, sondern auch dessen Zusammenbau erschwert.

Aus der DE 92 17 849 U1 ist ein Riegelverschluss für Türen oder Klappwände mit einem einstückigen, aus Kunststoff bestehenden Riegel bekannt. Dieser setzt sich zusammen aus einem längsgeführten, quaderförmigen Abschnitt, mit einer Mulde, in die zur Betätigung des Riegels ein Finger oder Daumen eingeführt werden kann, sowie einem die übrige Länge des Bauteils bildenden, federnden Längsabschnitt, dessen freies Ende sich gegen eine starre Struktur der Tür bzw. Klappwand abstützt. Zur Betätigung des Riegelverschlusses zieht der Benutzer den Riegel gegen die Wirkung der daran angeformten Feder zurück, wohingegen die Schließbewegung des Riegels allein durch die Wirkung der Feder erfolgt. Eine Spielfreiheit der Verriegelung ist nicht verlangt, vielmehr hat die Feder nur die Aufgabe, den Riegel bis in seine Schließstellung zu bewegen. Ist er dort angelangt, ist eine weitere Nachstellung nicht möglich, da die Endlage des Riegels stets durch einen Anschlag des Basisteils begrenzt ist.

Der Erfindung liegt die Aufgabe zugrunde, bei gleicher Wirksamkeit und Zuverlässigkeit des Riegelverschlusses den Aufwand für dessen Herstellung und den Zusammenbau des Verschlusses und damit dessen Kosten zu verringern.

Die Lösung dieser Aufgabe ergibt sich aus den Merkmalen des Anspruchs 1.

Durch die einstückige Ausführung von Riegelstumpf, Feder und Verriegelungsglied aus Kunststoff ist es möglich, die Zahl der herzustellenden und zusammenzubauenden Teile des Verschlusses erheblich zu verringern, wodurch sich beträchtliche Vereinfachungen und damit verringerte Kosten bei gleicher Wirksamkeit und Zuverlässigkeit ergeben. Der Riegel kann in einfacher Weise durch Spritzguss hergestellt werden.

Der Kunststoff besteht vorzugsweise aus faserverstärktem, insbesondere glasfaserverstärktem, Polyamid.

Der einstückige Riegelteil lässt sich am besten durch Spritzguss herstellen, wenn der Federteil aus einem gewellten oder zick-zack-förmigen Band besteht.

Besondere Bedeutung hat die Erfindung für solche Riegelverschlüsse, die in eine als Hohlprofil ausgebildete seitliche Einfassung der Bordwand eingebaut sind, welche gleichzeitig das Basisteil für den Riegelverschluss bildet und aus einem kastenförmigen Teil mit seitlich abstehenden parallelen Wangen besteht, welche den seitlichen Rand einer Bordwand umgreifen. Riegelstumpf und Verriegelungsglied werden dabei als quaderförmige Blöcke ausgebildet, die mit einem geringen Spiel innerhalb des kastenförmigen Teils des Hohlprofils gleiten können.

Es wird bei solchen in ein Hohlprofil integrierten Verschlüssen bevorzugt, dass die Handhabe in der Schließstellung in einer der Form der Handhabe entsprechenden Ausnehmung ruht und ihre Oberfläche mit derjenigen der Einfassung fluchtet.

Gemäß einer weiteren bevorzugten Ausführungsform ist das freie Ende der Handhabe, in Draufsicht, rund und insbesondere halbkreisförmig ausgebildet. Dadurch liegt die Handhabe beim Öffnen und Schließen gut in der Hand.

Bei einer besonderen, in ein Hohlprofil integrierten Ausführungsform des Verschlusses besitzt das Verriegelungsglied als Eingriffsorgan einen mit einem seitlichen Kopf vorspringenden Bolzen, der aus einem Schlitz in einer Seitenwand des kastenförmigen Teils des Hohlprofils vorspringt.

Zur Sicherung der Schließstellung wird es bevorzugt, dass in der Schließstellung sich das Kniegelenk des Kniehebels bezüglich der beiden äußeren Anlenkpunkte desselben in einer Übertotpunktlage befindet.

Die Schließanlage der Handhabe kann weiterhin zusätzlich oder alternativ mittels einer ausrückbaren Einrastvorrichtung gesichert sein. Die Einrastvorrichtung ist vorzugsweise eine federbelastete Wippe.

Das weitere Aufbauteil besteht vorzugsweise aus einer Runge oder aus einer über Eck stehenden Bordwand mit einem Hohlprofil als seitliche Einfassung.

Eine spezielle Ausführungsform eines erfindungsgemaßen Verschlusses wird nachstehend anhand der beigefügten Zeichnungen näher erläutert.

In den Zeichnungen zeigen:
Fig. 1 eine Aufsicht auf einen in eine seitliche Einfassung für eine Bordwand eingebauten erfindungsgemäßen Riegelverschluß in Schließstellung;
Fig. 2 einen Schnitt an der Linie A-A von Fig. 1;
Fig. 3 einen Schnitt an der Linie B-B von Fig. 1; und
Fig. 4 eine ahnliche Ansicht wie Fig. 3, wobei jedoch der Verschluß sich in einer Offenstellung befindet

Das Basisteil des Verschlusses besteht aus einem Hohlprofil 1 mit einem kastenförmigen Teil 2 und zwei davon seitlich abstehenden parallelen Wangen 3, welche im Anwendungsfall die Seitenkante einer Bordwand übergreifen und an dieser befestigt sind.

Im oberen Bereich des kastenförmigen Teils 2 ist ein Riegel 4 verschieblich gelagert, der aus einem Riegelstumpf 4a, einer zick-zack-förmigen Feder 4b, einem Verriegelungsglied 4c und einem Verriegelungsorgan besteht, das aus einem Bolzen 4d mit Kopf 4e besteht, wobei das Verriegelungsglied 4c über die Feder 4b mit dem Riegelstumpf 4a zusammenwirkt. Der Riegelstumpf 4a, die Feder 4b und das Verriegelungsglied 4c sind einstückig aus glasfaserverstärktem Poyamid durch Spritzguß hergestellt. Der Bolzen 4d mit seinem Kopf 4e besteht dagegen aus Metall und ist in einer entsprechenden Bohrung im Verriegelungsglied 4c befestigt, beispielsweise mit Hilfe eines Gewindes eingeschraubt. Der Bolzen 4d springt mit seinem Kopf 4e seitlich aus einem Schlitz 5 vor, der in eine Seitenwand des kastenförmigen Teils 2 der Hohlprofils 1 eingearbeitet ist. Er arbeitet mit einer entsprechenden Aufnahme des Teils zusammen, gegen das eine mit dem gezeigten Hohlprofil versehene Bordwand verriegelt werden soll.

Der Riegelstumpf 4a und das Verriegelungsglied 4c sind quaderförmig ausgebildet und passen mit geringem Spiel in den Hohlraum 2 der Hohlprofils 1.

Der Antrieb des Riegels besteht aus einem Lenker 6 und einer Handhabe 7. Der Lenker 6 ist einerseits mittels einer Achse 8 in den Seitenwandungen des kastenförmigen Teils 2 des Hohlprofils 1 und andererseits mittels einer Achse 9 and der Handhabe 7 angelenkt, welche ihrerseits mittels einer Achse 10 am Riegelstumpf 4a angelenkt ist.

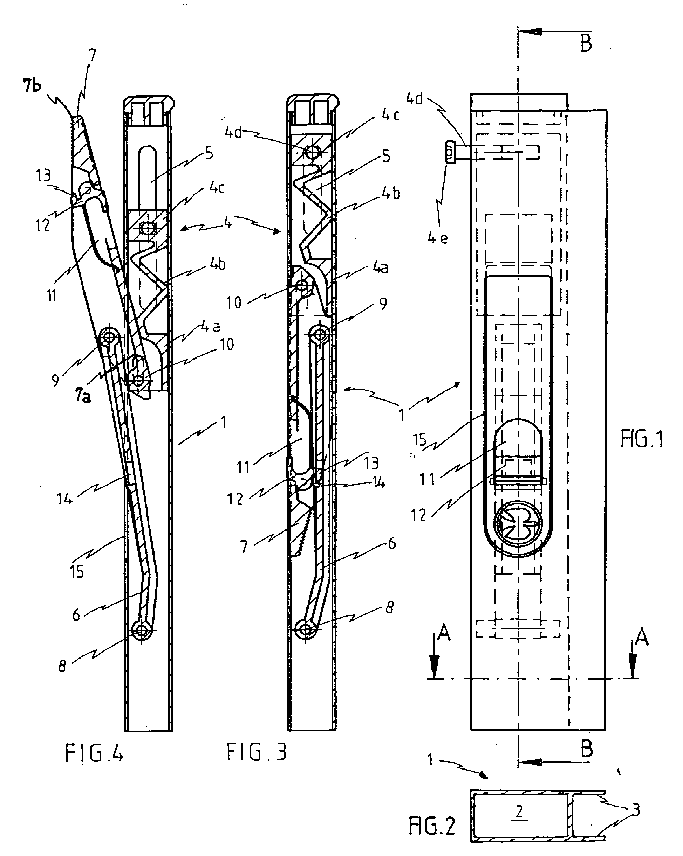

Der Lenker 6 und der zwischen den Achsen 9 und 10 liegende Teil 7a der Handhabe 7 bilden zusammen einen Kniehebel, wobei die Achse 9 das Kniegelenk darstellt, das in der in Fig. 3 gezeigten Schließstellung bezüglich der Achsen 8 und 10 in einer Übertotpunktlage liegt, wodurch die Schließstellung des Verschlusses fixiert wird.

Zur weitem Fixierung der Schließstellung ist in der Handhabe 7 innerhalb einer Mulde 11 derselben eine federbelastete Wippe 12 angeordnet, die in der Schließstellung mittels eines Hakens 13 in eine Ausnehmung 14 im Lenker 6 eingreift.

Die Handhabe 7 liegt in der Schließstellung in einer ihrer Form entsprechenden Öffnung 15 in der Vorderwand des kastenförmigen Teils 2 des Hohlprofils 1 und fluchtet in der Schließstellung mit der Oberfläche des Hohlprofils 1. Das freie Ende 7b der Handhabe 7 ist halbkreisförmig ausgebildet, so daß beim Öffnen des Verschlusses die Handhabe gut in der Hand der Bedienungsperson liegt.

Zum Öffnen des Verschlusses greift man mit einem Finger unter die federbelstete Wippe 12 und zieht an dieser, so daß der Haken 13 außer Eingriff mit der Ausnehmung 14 im Lenker 6 kommt. Durch weiteres Ziehen an der Wippe 12 schwenkt die Handhabe 7 aus, so daß sie untergriffen und bequem geöffnet werden kann. Die gute Handhabbarkeit wird insbesondere dadurch erreicht, daß die Handhabe 7 an ihrem freien Ende 7a halbkreisförmig ausgebildet ist.

## Patentansprüche

1. Riegelverschluss für Nutzfahrzeuge zum Verriegeln einer Bordwand, Türe oder dergleichen gegen ein weiteres Aufbauteil des Fahrzeugs, wobei der Riegelverschluss in eine als Hohlprofil (1) ausgebildete seitliche Einfassung der Bordwand eingebaut ist, welche Einfassung gleichzeitig das Basisteil des Riegelverschlusses bildet und aus einem kastenförmigen Teil (2) mit seitlich davon abstehenden parallelen Wangen (3) besteht, wobei der Riegel (4) in dem Basisteil (1) linear geführt ist und aus einem Riegelstumpf (4a) und einem mit diesem über eine Feder (4b) zusammenwirkenden Verriegelungsglied (4c) besteht und mittels eines mechanischen Antriebs (6, 7) gegen eine am weiteren Aufbauteil vorgesehene Aufnahme verriegelbar ist, wobei weiterhin der Antrieb (6, 7) aus einem einerseits am Riegelstumpf (4a) des Riegels (4) und anderseits am Hohlprofil (1) angelenkten Kniehebel besteht, von dem ein Kniehebelglied über das Kniegelenk (9) hinaus verlängert und dort als Handhabe (7) ausgebildet ist, und wobei der Riegelstumpf (4a) und das Verriegelungsglied (4c) mit geringem Spiel in dem Hohlprofil (1) gleiten können,
**dadurch gekennzeichnet,**
**dass** der Riegelstumpf (4a), die Feder (4b) und das Verriegelungsglied (4c) aus einem Stück und aus Kunststoff bestehen, dass die Feder (4b) zwischen dem Verriegelungsglied (4c) und dem Riegelstumpf (4a) angeordnet ist, und dass ein Verriegelungsorgan (4d) vorhanden ist, welches aus einem ausschließlich am Verriegelungsglied (4c) befestigten, quer zur Verschieberichtung des Verriegelungsgliedes (4c) sich erstreckenden Bolzen (4d) besteht, der einen Kopf (4e) aufweist, der aus einem Schlitz (5) im Hohlprofil (1) vorspringt.

2. Riegelverschluss nach Anspruch 1, **dadurch gekennzeichnet, dass** der Kunststoff aus faserverstärktem, insbesondere glasfaserverstärktem, Polyamid besteht.

3. Riegelverschluss nach Anspruch 1 oder 2, **dadurch gekennzeichnet, dass** die Feder (4b) des Riegels (4) aus einem gewellten oder zick-zack-förmigen Band besteht.

4. Riegelverschluss nach Anspruch 1, **dadurch gekennzeichnet, dass** in der Schließstellung die Handhabe (7) in einer der Form der Handhabe (7) entsprechenden Öffnung (15) der Einfassung ruht und ihre Oberfläche mit derjenigen der Einfassung fluchtet.

5. Riegelverschluss nach Anspruch 4, **dadurch gekennzeichnet, dass** das freie Ende der Handhabe (7), in Draufsicht, rund und insbesondere halbkreisförmig ausgebildet ist.

6. Riegelverschluss nach einem der vorhergehenden Ansprüche, **dadurch gekennzeichnet, dass** in der Schließstellung sich das Kniegelenk (9) des Kniehebels bezüglich zweier äußerer Anlenkpunkte (8, 10) des Kniehebels in einer Übertotpunktlage befindet.

7. Riegelverschluss nach einem der vorhergehenden Ansprüche, **dadurch gekennzeichnet, dass** in der Schließstellung die Handhabe (7) mittels einer ausrückbaren Einrastvorrichtung (12) gesichert ist.

8. Riegelverschluss nach Anspruch 7, **dadurch gekennzeichnet, dass** die Einrastvorrichtung aus einer in einer Mulde (11) der Handhabe (7) angeordneten federbelasteten Wippe (12) besteht.

9. Riegelverschluss nach einem der vorangehenden Ansprüche, **dadurch gekennzeichnet, dass** das weitere Aufbauteil aus einer Runge oder aus einer über Eck stehenden Bordwand mit einem Hohlprofil als seitliche Einfassung besteht.

## Claims

1. A lock closure for utility vehicles for locking a side wall, door or the like against a further bodywork part of the vehicle, wherein the lock closure is incorporated in a lateral surround of the side wall designed in the form of a hollow profile (1), which surround at the same time forms the base part of the lock closure and comprises a box-shaped part (2) with parallel side members (3) projecting laterally from it, wherein the lock (4) is guided in a linear manner in the base part (1) and comprises a stump (4a) and a locking member (4c) co-operating with the latter by way of a spring (4b) and is capable of being locked by means of a mechanical drive (6, 7) against a receiving means provided on the further bodywork part, wherein the drive (6, 7) further comprises an angle lever which is articulated to the stump (4a) of the lock (4) at one end and to the hollow profile (1) at the other end and from which an angle lever member extends beyond the angle joint (9) and is formed as a handle (7) there, and wherein the lock stump (4a) and the locking member (4c) can slide in the hollow profile (1) with slight clearance, **characterized in that** the lock stump (4a), the spring (4b) and the locking member (4c) are in one piece and consist of plastics material, the spring (4b) is arranged between the locking member (4c) and the lock stump (4a), and a locking body (4d) is present which comprises a pin (4d) which is fastened exclusively to the locking member (4c) and extends transversely to the displacement direction of the locking member (4c) and which has a head (4e) which projects out of a slot (5) in the hollow profile (1).

2. A lock closure according to Claim 1, **characterized in that** the plastics material comprises fibre reinforced, in particular glass fibre reinforced, polyamide.

3. A lock closure according to Claim 1 or 2, **characterized in that** the spring (4b) of the lock (4) comprises a corrugated strip or a strip in the shape of a zigzag.

4. A lock closure according to Claim 1, **characterized in that** in the closed position the handle (7) rests in an opening (15) in the surround corresponding to the shape of the handle (7) and its surface is in alignment with that of the surround.

5. A lock closure according to Claim 4, **characterized in that** the free end of the handle (7) is made round and, in particular, semicircular, as seen in plan view.

6. A lock closure according to any one of the preceding Claims, **characterized in that** in the closed position the angle joint (9) of the angle lever is in a top dead centre position with respect to two outer articulation points (8, 10) of the angle lever.

7. A lock closure according to any one of the preceding Claims, **characterized in that** in the closed position the handle (7) is secured by means of a disengageable catch apparatus (12).

8. A lock closure according to Claim 7, **characterized in that** the catch apparatus comprises a spring-loaded rocker (12) arranged in a hollow (11) in the handle (7).

9. A lock closure according to any one of the preceding Claims, **characterized in that** the further bodywork part comprises a stanchion or a side wall standing on a corner and with a hollow profile as a lateral surround.

## Revendications

1. Dispositif de verrouillage pour des véhicules utilitaires, destiné à verrouiller une ridelle, des portes ou tout élément similaire contre un autre élément de carrosserie du véhicule, ledit dispositif de verrouillage étant monté dans un dormant latéral de la ridelle, réalisé sous forme de profilé creux (1), ledit dormant formant en même temps la partie de base du dispositif de verrouillage et étant formé par une partie (2) en forme de caisson avec des joues (3) parallèles en forme de saillies latérales sur celle-ci, le verrou (4) étant guidé linéairement dans la partie de base (1) et étant formé par un tronçon (4a) et un élément de verrouillage (4c) coopérant avec ce dernier par l'intermédiaire d'un ressort (4b), et pouvant être verrouillé contre un logement prévu sur l'autre élément de carrosserie au moyen d'un système d'entraînement (6, 7) mécanique, ledit système d'entraînement (6, 7) étant formé, pour sa part, par un levier coudé, lequel est articulé, d'une part, sur le tronçon (4a) du verrou (4) et, d'autre part, sur le profilé creux (1), et à partir duquel une tige de levier se prolonge au-delà de l'articulation rotative (9) et est réalisée sous la forme d'une manette (7), et le tronçon (4a) du verrou et l'élément de verrouillage (4c) pouvant glisser avec un faible jeu dans le profilé creux (1),
**caractérisé en ce que**
le tronçon (4a) du verrou, le ressort (4b) et l'élément de verrouillage (4c) sont réalisés d'un seul tenant et en matière plastique, **en ce que** le ressort (4b) est agencé entre l'élément de verrouillage (4c) et le tronçon (4a) du verrou, et **en ce qu'**il est prévu un organe de verrouillage (4d), lequel est formé par un boulon (4d), qui est formé uniquement sur l'élément de verrouillage (4c) et s'étend transversalement au sens de déplacement de l'élément de verrouillage (4c) et qui comporte une tête (4e) qui s'avance hors d'une fente (5) dans le profilé creux (1).

2. Dispositif de verrouillage selon la revendication 1, **caractérisé en ce que** la matière plastique est formée par un polyamide renforcé par des fibres, en particulier renforcé par des fibres de verre.

3. Dispositif de verrouillage selon la revendication 1 ou 2, **caractérisé en ce que** le ressort (4b) du verrou (4) est réalisé dans une lame ondulée ou en forme de zigzag.

4. Dispositif de verrouillage selon la revendication 1, **caractérisé en ce que** dans la position de fermeture, la manette (7) repose dans un orifice (15) du dormant, dont la forme correspond à celle de la manette (7), et sa face supérieure est située à fleur du dormant.

5. Dispositif de verrouillage selon la revendication 4, **caractérisé en ce que**, sur une vue en élévation, l'extrémité libre de la manette (7) est ronde et, en particulier, semi-circulaire.

6. Dispositif de verrouillage selon l'une quelconque des revendications précédentes, **caractérisé en ce que** dans la position de fermeture, l'articulation rotative (9) du levier coudé est située dans une position de point mort supérieure à la normale par rapport à deux points d'articulation (8, 10) extérieurs du levier coudé.

7. Dispositif de verrouillage selon l'une quelconque des revendications précédentes, **caractérisé en ce que** dans la position de fermeture, la manette (7) est immobilisée au moins d'un dispositif de blocage (12) pouvant être découplé.

8. Dispositif de verrouillage selon la revendication 7, **caractérisé en ce que** le dispositif de blocage est formé par une bascule (12) sollicitée par un ressort et agencée dans un creux (11) de la manette (7).

9. Dispositif de verrouillage selon l'une quelconque des revendications précédentes, **caractérisé en ce que** l'autre élément de carrosserie est formé par une ranche ou par une ridelle disposée en angle avec un profilé creux formant le dormant latéral.
